# EUROPEAN PATENT APPLICATION

(11) **EP 4 803 373 A1**
(43) Date of publication of application: **09.09.2026**
(21) Application number: 25161312.1
(22) Date of filing: 03.03.2025
(51) Int. Cl.: B60Q 3/12, B60Q 3/14, B60Q 3/16, B60Q 3/217, B60Q 3/225, B60Q 3/233, B60Q 3/60, B60Q 3/62, B60Q 3/78, B60Q 3/80, B60Q 3/74

(54) **ILLUMINATION ASSEMBLY FOR AN INTERIOR FOR A PASSENGER CABIN OF A VEHICLE, A VEHICLE COMPRISING THE SAME, AND A METHOD FOR OPERATING AN ILLUMINATION ASSEMBLY**

(71) Applicant: Volvo Car Corporation, 405 31 Göteborg (SE)
(72) Inventor: PEREZ BARRERA, Oswaldo, 40531 Göteborg (SE); MORALES, Gerardo, 40531 Göteborg (SE)
(74) Representative: Kransell & Wennborg KB

(57) **Abstract**

The disclosure relates to an illumination assembly for an interior of a passenger cabin of a vehicle (900). The illumination assembly comprises a light source unit (111). The illumination assembly further comprises a first, plate-shaped light radiation element (112) having a front surface orientable towards the interior of the passenger cabin of the vehicle (900). Moreover, the illumination assembly comprises a second light radiation element 113 arranged adjacent to an edge of the first, plate-shaped radiation element. The arrangement is such that the second light radiation element (113) may radiate towards the front surface of the first, plate-shaped light radiation element. The first, plate-shaped light radiation element (112) is optically coupled to the light source unit (111). Further, the second light radiation element (113) is optically coupled to the light source unit (111). The disclosure further relates to a vehicle (900) comprising the illumination assembly, and a method for operating the illumination assembly.

## Description

### TECHNICAL FIELD

The present disclosure relates to an illumination assembly for an interior of a passenger cabin of a vehicle.

The present disclosure further relates to a vehicle comprising the illumination assembly.

Further, the present disclosure relates to a method for operating an illumination assembly for an interior of a passenger cabin of a vehicle.

### BACKGROUND ART

A conventional interior lighting system is used for illuminating the interior of a cabin of a vehicle. Such a conventional system offers different lighting modes which include locally activating or deactivating illumination and/or adjusting illumination intensity. Based on these lighting modes, users of a vehicle can select a lighting situation that is appropriate for their current situation. This means that a certain visibility of components in the interior of the vehicle is achieved without disturbing visibility/concentration on the outside traffic.

### SUMMARY

The objective of the present disclosure is to improve an illumination assembly for an interior of a passenger cabin of a vehicle

The problem is at least partially solved or alleviated by the subject matter of the independent claims of the present disclosure, wherein further examples are incorporated in the dependent claims.

According to a first aspect, there is provided an illumination assembly for an interior of a passenger cabin of a vehicle. The illumination assembly comprises a light source unit. SE:TOP
The illumination assembly further comprises a first, plate-shaped light radiation element having a front surface orientable towards the interior of the passenger cabin of the vehicle. Moreover, the illumination assembly comprises a second light radiation element arranged adjacent to an edge of the first, plate-shaped radiation element. The arrangement is such that the second light radiation element may radiate towards the front surface of the first, plate-shaped light radiation element. The first, plate-shaped light radiation element is optically coupled to the light source unit. The second light radiation element is optically coupled to the light source unit.

The interior of the passenger cabin of the vehicle may comprise or be a space within the vehicle which may be occupied by one or more occupants.

The vehicle may comprise or be a motor vehicle.

The motor vehicle may comprise or be an automotive vehicle.

The light source unit may comprise or be a module or device from which the light used for the illumination purpose originates.

The first, plate-shaped light radiation element may comprise or be a body with a flat surface. Additionally or alternatively, the first, plate-shaped light radiation element may comprise or be at least one bent and/or curved portion.

Herein, a component may be orientable when the component may be arrangeable to a desired direction.

The first, plate-shaped light radiation element may be oriented towards the interior of the passenger cabin of the vehicle, such that the first, plate-shaped light radiation element may radiate towards the interior of the passenger cabin.

Herein, the phrase "may radiate" may refer to a controllability or operability.

For instance, the first, plate-shaped light radiation element may be controllable and/or controlled to radiate or not radiate.

Similarly, for instance, the second light radiation element may be controllable and/or controlled to radiate or not radiate.

The first, plate-shaped light radiation element may comprise or be an optical waveguide (herein generally referred to as waveguide) for guiding the light entering the waveguide.

The waveguide may radiate the guided light in a direction perpendicular to a light guiding axis through the waveguide.

The second light radiation element may comprise or be a waveguide for guiding the light entering the waveguide.

The waveguide may radiate the guided light in a direction perpendicular to a light guiding axis through the waveguide.

Herein, the term "adjacent" may comprise or be a physical proximity and defined by a Euclidean distance between a point on the edge of the first, plate-shaped radiation element and a point on the second light radiation element.

Alternatively or additionally, the term "adjacent" may be defined by the light intensity of the front surface of the first, plate-shaped light radiation element, when the second light radiation element radiates towards the front surface of the first, plate-shaped light radiation element.

Herein the phrase "radiate towards" may comprise or be directing or guiding the light towards a desired direction.

Such directional radiation may be achieved by a directional light source or waveguide.

Additionally or alternatively, such directional radiation may be achieved by a light housing which optically and/or physically covers at least a part of the light radiating element, module, or a unit, thereby blocking the radiation in undesired direction.

Herein, when two elements, modules, or units are "optically coupled", the light from one element enters the other element, hence coupled.

For instance, when the first, plate-shaped light radiation element is optically coupled to the light source unit, the light originating from the light source unit enters the first, plate-shaped light radiation element.

Similarly, for instance, when the second light radiation element is optically coupled to the light source unit, the light originating from the light source unit enters the second light radiation element.

The illumination assembly according to the first aspect above may advantageously increase modularity specifically by optically coupling, and thereby illuminating, two different radiation elements using a single light source unit.

Alternatively or additionally, the illumination assembly according to the first aspect above may advantageously improve directionality of the illumination specifically by orienting the different radiation elements.

Alternatively or additionally, the illumination assembly according to the first aspect above may advantageously improve compactness and/or structural simplicity.

Alternatively or additionally, the illumination assembly according to the first aspect above may advantageously improve procedural simplicity, e.g., simplicity in assembly.

According to an example, the light source unit comprises at least one first light source being optically couplable to the first, plate-shaped light radiation element, and wherein the light source unit comprises at least one second light source being optically couplable to the second light radiation element.

The at least one first light source may comprise or be a light-emitting diode (LED).

The at least one second light source may comprise or be a light-emitting diode (LED).

The illumination assembly according to the example above may advantageously improves ability to modify and/or replace the light source unit and/or the light radiation element(s).

According to an example, the at least one first light source and the at least one second light source share a substrate or are electrically connected to a common board sharing a substrate.

The common board may be a printed circuit board (PCB) or an application-specific integrated circuit (ASIC).

The illumination assembly according to the example above may advantageously improves the compactness and/or the manufacturing processes.

According to an example, the at least one first light source and the at least one second light source are individually controllable.

A plurality of operating modes of the at least one first light source and the at least one second light source may comprise a first operating mode and a second operating mode.

In the first operating mode, the at least one first light source is controlled to be enabled, i.e., radiate, and the at least one second light source is controlled to be disabled, i.e., not radiate.

In the second operating mode, the at least one first light source is controlled to be disabled, i.e., not radiate, and the at least one second light source is controlled to be enabled, i.e., radiate.

The illumination assembly according to the example above may advantageously improve the visibility of controls and other elements inside the cabin by selectively operating the illumination assembly for an appropriate illumination inside the passenger cabin, e.g., as a function of the lighting conditions external to the vehicle.

Additionally or alternatively, the illumination assembly according to the example above may advantageously reduce the distraction and/or visual hinderance by selectively operating the illumination assembly for an appropriate illumination inside the passenger cabin, e.g., as a function of the lighting conditions external to the vehicle.

According to an example, the light source unit comprises a light source housing having an inner cavity for arranging the at least one first light source and the at least one second light source inside the inner cavity.

The light source unit may comprise a first opening for optically coupling the at least one first light source to the first, plate-shaped light radiation element.

The light source unit may comprise a second opening for optically coupling the at least one second light source to the second light radiation element.

The illumination assembly according to the example above may advantageously increase mechanical stability for the light sources.

According to an example, the light source housing comprises an optical separator inside the inner cavity.

The optical separate may be a spacing between the at least one first light source and the at least one second light source.

The optical separator may be a wall arranged between the at least one first light source and the at least one second light source.

The optical separator may prevent the light, originating from the at least one first light source, from optically interacting with or coupling to the first, plate-shaped light radiation element.

The optical separator may prevent the light, originating from the at least one second light source, from optically interacting with or coupling to the second light radiation element.

The illumination assembly according to the example above may advantageously optically separate the light sources, thereby preventing the generated light from entering into a non-interfacing light radiation element.

According to an example, the illumination assembly further comprises a first coupling element being mechanically supportive of the first, plate-shaped light radiation element; and a second coupling element being mechanically supportive of the second light radiation element, wherein the first coupling element is rigidly fixable to the light source housing, and wherein the second coupling element is rigidly fixable to the light source housing.

When the first coupling element is rigidly fixed to the light source housing, the at least one first light source may be optically coupled to the first, plate-shaped light radiation element.

The first coupling element may be plate-shaped or comprise a plate-shaped portion.

The first coupling element may comprise at least one protrusion and/or at least one recess for mechanically connecting with the corresponding at least one recess and/or at least one recess of the first, plate-shaped light radiation element, for fastening the coupling.

The first coupling element may be couplable and/or coupled to a back side of the first, plate-shaped light radiation element.

The first coupling element may be opaque or comprise an opaque portion.

When the second coupling element is rigidly fixed to the light source housing, the at least one second light source may be optically coupled to the second light radiation element.

The second coupling element may be tube-shaped or comprise a tube-shaped portion,

The tube-shaped second coupling or the tube-shaped portion comprises a hollow inner cavity.

The second coupling element may be curved or comprises a curved portion.

The second radiation element may be arrangeable and/or arranged inside the hollow inner cavity of the tube-shaped portion of the second coupling element.

The second coupling element may comprise at least one protrusion and/or at least one recess for mechanically connecting with the corresponding at least one recess and/or at least one recess of the second light radiation element, for fastening the coupling.

The second coupling element may be opaque or comprise an opaque portion.

The illumination assembly according to the example above may advantageously increase mechanical stability, specifically by fastening the light radiation elements with the respective coupling units.

According to an example, the illumination assembly further comprises a decorative plate having a rear surface illuminable by the first, plate-shaped light radiation element and having a front surface orientable towards the interior of the passenger cabin of the vehicle and illuminable by the second light radiation element.

The decorative plate may overlap with the first, plate-shaped light radiation.

The decorative plate may be couplable or coupled to the first, plate-shaped light radiation.

The illumination assembly according to the example above may advantageously increase modularity, specifically by providing surfaces to be illuminated using two different light radiation elements.

According to an example, the decorative plate comprises at least one translucent portion and/or at least one transparent portion.

The at least one translucent portion and/or at least one transparent portion may let the radiated light from the first, plate-shaped light radiation element through the decorative plate.

The at least one translucent portion and/or at least one transparent portion may comprise or be a thin sheet.

The at least one translucent portion and/or at least one transparent portion may comprise or be at least one opening such as a slit, a gap, or a shaped opening.

The illumination assembly according to the example above may advantageously improve directionality, specifically by providing passages for the light radiating onto the decorative plate from the rear side thereof to pass through.

According to an example, the illumination assembly further comprises a light diffusible plate being arrangeable between the first, plate-shaped light radiation element and the decorative plate.

The illumination assembly according to the example above may advantageously improve directionality of the illumination.

According to an example, the second light radiation element extends over at least 80% of a length of the edge of the first, plate-shaped radiation element.

The illumination assembly according to the example above may advantageously improve directionality of the illumination.

According to a second aspect, there is provided a vehicle comprising the illumination assembly of any one of the examples of the first aspect.

Such vehicle may advantageously increase modularity specifically by optically coupling, and thereby illuminating, two different radiation elements using a single light source unit.

Alternatively or additionally, such vehicle may advantageously improve directionality of the illumination specifically by orienting the different radiation elements.

Alternatively or additionally, such vehicle may advantageously improve compactness and/or structural simplicity.

Alternatively or additionally, such vehicle may advantageously improve procedural simplicity, e.g., simplicity in assembly.

According to an example, the illumination assembly is mounted on at least one of a dashboard of the vehicle, an interior sidewall of at least one door, a glovebox, a rear side of at least one seat, a ceiling, at least one of the front doors, and at least one of the rear doors.

The vehicle according to the example above may advantageously improve directionality of the illumination.

According to an example, the vehicle comprises a plurality of illumination assemblies of any one of the examples of the first aspect.

The vehicle according to the example above may advantageously improve directionality of the illumination.

According to a third aspect, there is provided a method for operating an illumination assembly for an interior of a passenger cabin of a vehicle, the method comprising: obtaining data indicative of switching on or off a light source unit of the illumination assembly; and causing the light source unit of the illumination assembly to switch on or off based on the obtained data.

Such method may advantageously increase modularity specifically by optically coupling, and thereby illuminating, two different radiation elements using a single light source unit.

The method according to the third aspect may be executed in combination with the illumination assembly according to the first aspect.

Alternatively or additionally, such method, of operating the illumination assembly, may advantageously contribute to improving directionality of the illumination specifically by orienting the different radiation elements.

Alternatively or additionally, such method, of operating the illumination assembly, may advantageously contribute to improving the compactness and/or structural simplicity.

Alternatively or additionally, such method, of operating the illumination assembly, may advantageously contribute to improving procedural simplicity, e.g., simplicity in assembly.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to an example, when there is a plurality of illumination assemblies comprised in a vehicle, the plurality of illumination assemblies may be controlled individually or any combination of the plurality of illumination assemblies may be controlled jointly.

The method according to the example above may advantageously improve modularity and/or controllability.

The data may be provided by a user or a passenger of the vehicle.

The user or the passenger of the vehicle may be prompted to provide the data through an interface, e.g., a graphical user interface (GUI).

According to an example, causing the light source unit of the illumination assembly to switch on or off comprises: switching on the at least one first light source and switching off the at least one second light source; or switching off the at least one first light source and switching off the at least one second light source.

The method according to the example above may advantageously improve modularity and/or controllability.

According to a fourth aspect, there is provided a data processing apparatus comprising means for carrying out the method according to any one of the examples of the third aspect described herein.

Using such data processing apparatus, enabling operation of the illumination assembly, may advantageously contribute to increasing modularity specifically by optically coupling, and thereby illuminating, two different radiation elements using a single light source unit.

Alternatively or additionally, using such data processing apparatus, enabling operation of the illumination assembly, may advantageously contribute to improving directionality of the illumination specifically by orienting the different radiation elements.

According to a fifth aspect, there is provided a computer program comprising instructions which, when the computer program is executed by a computer, cause the computer to carry out the method according to any one of the examples of the third aspect described herein.

Using such computer program, enabling operation of the illumination assembly, may advantageously contribute to increasing modularity specifically by optically coupling, and thereby illuminating, two different radiation elements using a single light source unit.

Alternatively or additionally, using such computer program, enabling operation of the illumination assembly, may advantageously contribute to improving directionality of the illumination specifically by orienting the different radiation elements.

The computer may be the data processing apparatus according to the fourth aspect described herein.

According to a sixth aspect, there is provided a computer-readable storage medium having stored the computer program element of the fifth aspect.

Using such computer readable storage medium, enabling operation of the illumination assembly, may advantageously contribute to increasing modularity specifically by optically coupling, and thereby illuminating, two different radiation elements using a single light source unit.

Alternatively or additionally, using such computer readable storage medium, enabling operation of the illumination assembly, may advantageously contribute to improving directionality of the illumination specifically by orienting the different radiation elements.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: illustrates an illumination assembly from a skewed perspective and an exploded view of the individual parts thereof according to an example of the present disclosure.
- Figure 2: illustrates an exploded view of the light source unit shown in Figure 1.
- Figure 3: illustrates detailed view of the first, plate-shaped light radiation element and the second light radiation element as shown in Figure 1.
- Figure 4: illustrates a rear view of the first, plate-shaped light radiation element and a first coupling element as shown in Figure 1.
- Figure 5a): illustrates an assembly of the second light radiation element and the second coupling element as shown in Figure 1.
- Figure 5b): illustrates a detailed view of the assembly of the bent portion of the second coupling element shown in Figure 5a).
- Figure 5c): illustrates a detailed view of the interface of the second coupling element as shown in Figure 5a).
- Figure 5d): illustrates a detailed view of the assembly of the second light radiation element and the second coupling element as shown in Figure 5a).
- Figure 6: illustrates a view from the skewed perspective of a diffusive plate according to an embodiment of the present disclosure and the decorative plate as shown in Figure 1.
- Figure 7a): illustrates a view from the skewed perspective of the illumination assembly as shown in Figure 1 operating in a first operating mode, and a frontal view of the illumination of such illumination assembly.
- Figure 7b): illustrates a view from the skewed perspective of the illumination assembly as shown in Figure 1 operating in a second operating mode, and a frontal view of the illumination of such illumination assembly.
- Figure 8a): illustrates an exploded view of the individual parts comprised in an illumination assembly according to another example of the present disclosure.
- Figure 8b): illustrates the illumination assembly as shown in Figure 8a) operating in a first operation mode, and a frontal view of the illumination of such illumination assembly.
- Figure 9: illustrates a frontal view from inside the passenger cabin of a vehicle according to an example of the present disclosure.
- Figure 10: illustrates a method according to an example of the present disclosure.

### DETAILED DESCRIPTION

The Figures are merely schematic representations and serve only to illustrate examples of the disclosure. Identical or equivalent elements are in principle provided with the same reference signs.

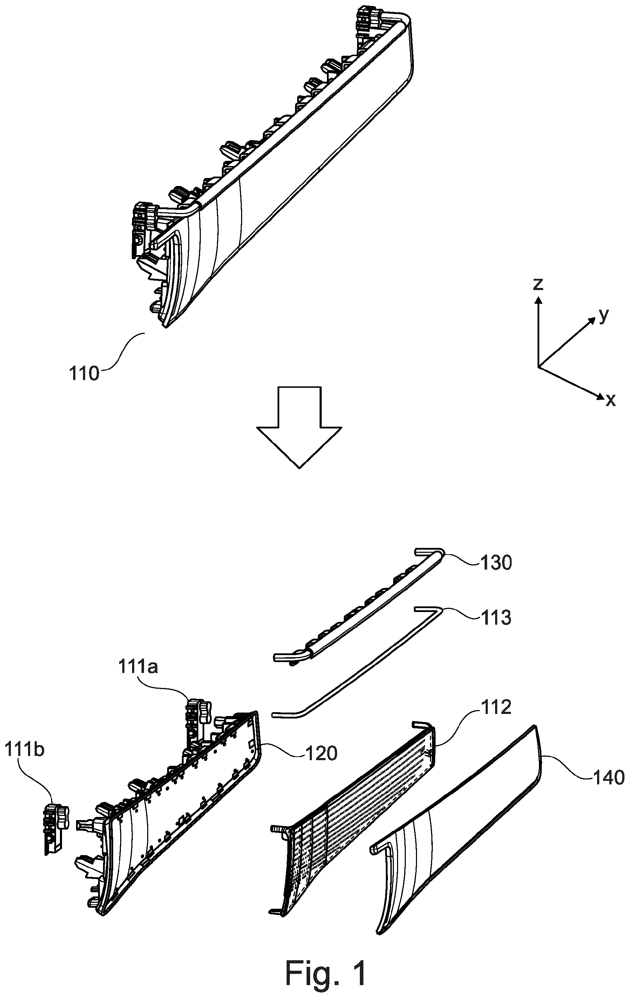

Figure 1 illustrates an illumination assembly 110 for an interior of a passenger cabin of a vehicle 900, and the disassembled view of the illumination assembly.

The illumination assembly 110 comprises two light source units 111a and 111b, a first, plate-shaped light radiation element 112, and a second light radiation element 113.

The illumination assembly 110 further comprises a first coupling unit 120, a second coupling unit 130, and a decorative plate 140.

The individual elements of the illumination assembly are further elaborated in reference to the following figures.

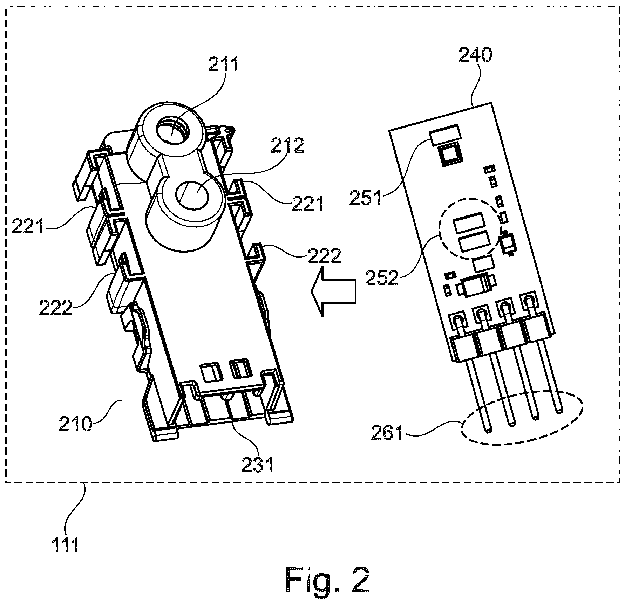

Figure 2 illustrates a light source unit 111.

The light source unit 111 comprises a light source housing 210.

The light source housing 210 comprises an inner cavity for arranging a printed circuit board (PCB) 240 having two groups of light sources thereon.

The first group of light source 251 comprises a single light emitting diode (LED), and the second group of light source 252 comprises two LEDs.

The board comprises interface pins 261 for connecting to a power source and receiving control signals.

The first group of light source 251 and the second group of light source 252 are individually controllable.

The light source housing 210 comprises a first opening 211 and a second opening 212.

The first opening 211 and the second opening 212 extends from the light source housing away from the inner cavity of the light source housing, thereby forming tubes.

The tubes arrange the optical coupling portions of the first, plate-shaped light radiation element 112 and of the second light radiation element 113 for optical coupling.

The light source housing 210 is opaque for trapping the lights from the LEDs therein.

The lights from the LEDs pass through the first opening 211 and the second opening 212 of the light source housing 210.

The light source housing 210 comprises two first clasps 221 on the peripheral for interlocking with the first coupling unit 120, i.e., one on each side of the peripheral.

The light source housing 210 comprises two second clasps 222 on the peripheral for interlocking with the second coupling unit 130, i.e., one on each side of the peripheral.

The light source housing 210 further comprises a pin opening 231 for arranging interface pins of the board arranged inside the light source housing

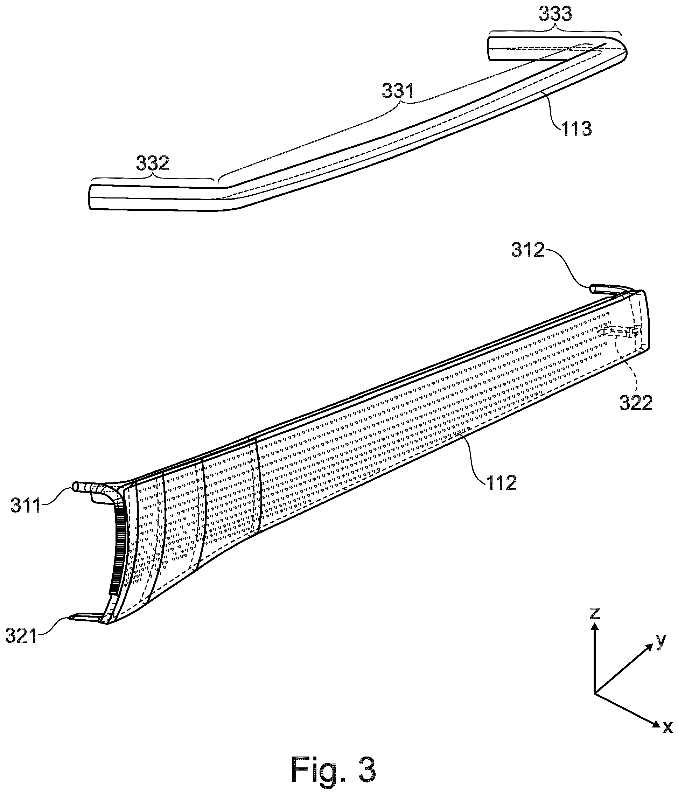

Figure 3 illustrates the first, plate-shaped light radiation element 112 and the second light radiation element 113.

The first, plate-shaped light radiation element 112 is a waveguide.

The first, plate-shaped light radiation element 112 comprises two optical coupling portions 311 and 312.

The two optical coupling portions 311 and 312 are cylinder-shaped and extends from two upper (i.e., in the positive direction of the z-axis in Figure 3) corners of a rear surface and away from the rear surface (i.e., in the negative direction of the x-axis in Figure 3) of the first, plate-shaped light radiation element 112.

The two optical coupling portions 311 and 312 receive light from the optically coupled respective light sources.

The received light is guided through the plate portion of the first, plate-shaped light radiation element.

The optical coupling portions 311 and 312 of the first, plate-shaped light radiation element 112 is optically coupled to the two light source units 111a and 111b, respectively.

The second light radiation element 113 is a waveguide and is cylinder-shaped.

The second light radiation element 113 comprises a central portion 331, and two bent portions 332 and 333 at both ends bent towards the same direction as the two optical coupling portions 311 and 312 of the first, plate-shaped light radiation element 112 (i.e., in the negative direction of the x-axis in Figure 3).

The bent portions 332 and 333 receive the light from the optically coupled respective light sources.

The received light is guide through the central portion 331 of the second light radiation element 113.

The first, plate-shaped light radiation element 112 and the second light radiation element 113 comprises internal prism or prism-like structure, thus is configured to scatter at least a part of the guided light into any direction that is non-parallel to the guiding axis through which the light is guided.

Consequently, the light guided through the first, plate-shaped light radiation element 112 and the second light radiation element 113 scatters into random or desired directions.

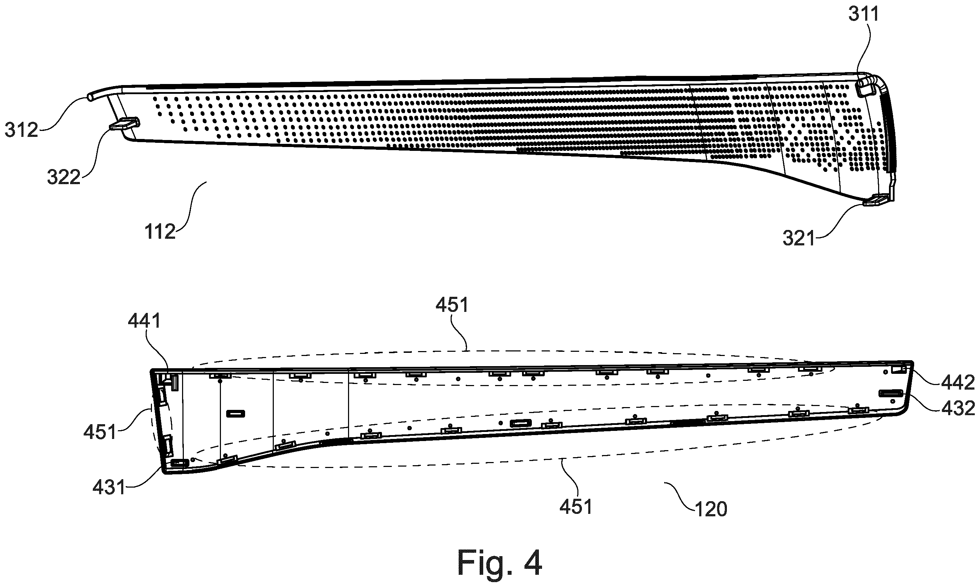

Figure 4 illustrates a rear surface of the first, plate-shaped light radiation element 112 and a front surface of the first coupling element 120.

The first, plate-shaped light radiation element 112 comprises two optical coupling portions 311 and 312 as described above.

The first, plate-shaped light radiation element 112 further comprises a first coupling protrusion 321 and a second coupling protrusion 322.

The first coupling protrusion 321 interlocks with a first coupling recess 431 of the first coupling unit 120, and the second coupling protrusion 322 interlocks with a second coupling recess 432 of the first coupling unit 120.

The first coupling unit 120 further comprises interlocking slits 451 along the edges thereof.

Such slits 451 are for allowing ribs comprised in a further object and fixing the position.

The first coupling unit 120 comprises a cavity for fitting the first, plate-shaped light radiation element 112 therein.

The first coupling unit 120 is opaque.

This prevents the light radiated from the first, plate-shaped light radiation element 112 from passing through the first coupling unit 120.

The first coupling unit 120 further comprises two interface portions 441 and 442.

The two interface portions 441 and 442 are tube-shaped and extends from two upper corners towards same direction as the two optical coupling portions of the first, plate-shaped light radiate one element 112.

The two interface portions 441 and 442 arrange the two optical coupling portions of the first, plate-shaped light radiation element 112 therein.

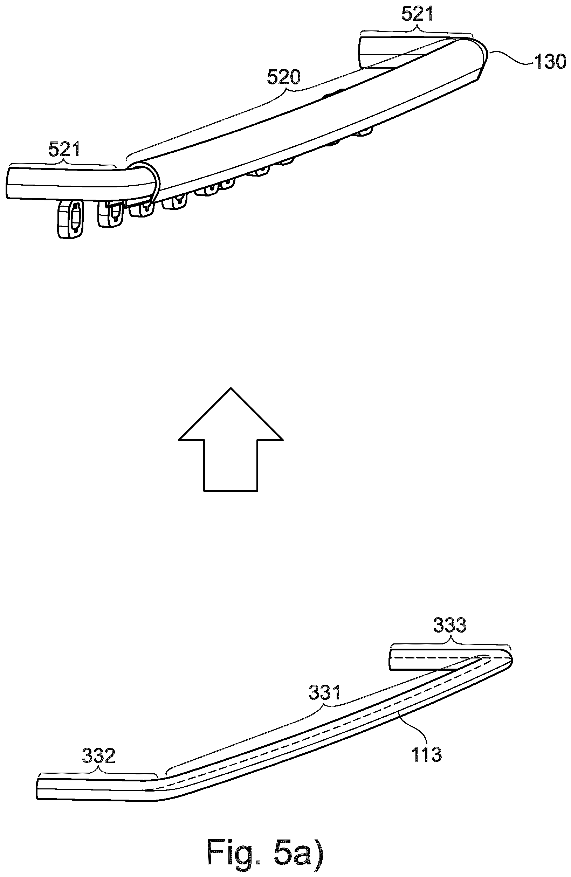

Figure 5a) illustrates the second light radiation element 113 and the second coupling element.

The second coupling unit 130 comprises a cavity for fitting the second light radiation element 113 therein.

The second coupling unit 130 comprises a central portion 331 and two bent portions 521.

The two bent portions 521 are bent towards the same direction as the two respective bent portions 332 and 333 of the second light radiation element 113.

The two bent portions 521 of the second coupling unit 130 arrange the respective two bent portions of the second light radiation element 113.

The second coupling unit 130 is opaque.

This prevents the light radiated from the second light radiation element 113 from passing therethrough.

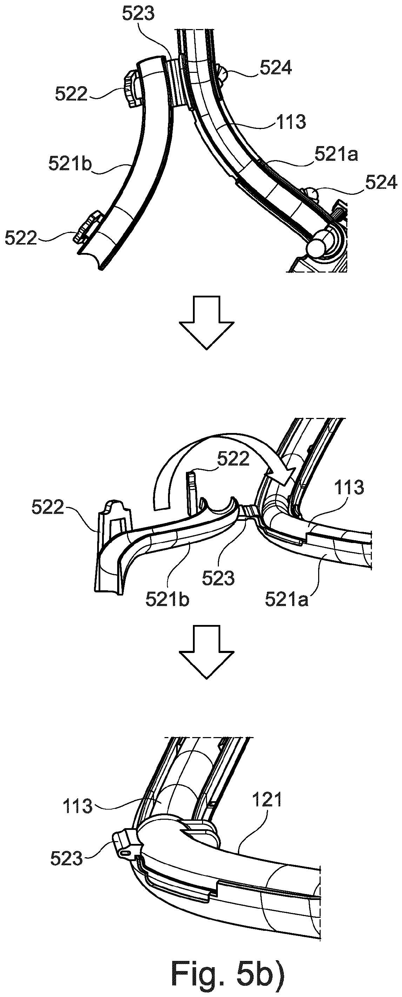

The bent portions 521 of the second coupling unit 130 are further elaborated in refence to Figure 5b).

One bent portion of the second coupling unit 130 comprises an upper body 521a and a lower body 521b.

The upper body 521a and the lower body 521b are connected to each other by means of a hinge 523 (see the upper sub-figure in Figure 5b)).

The upper body 521a comprises clipping pairs 524, i.e., protrusion, for fastening with clips 522 of the lower body 521b.

The lower body 521b comprises the matching clips 522 for fastening with the clipping pair 524s of the upper body 521a.

The lower body 521b and the upper body 521a are fastened by folding the hinge 523 and interlocking the clips 522 with the matching clipping pair 524s (see the middle sub-figure in Figure 5b)).

The upper body 521a and the lower body 521b together form a complete a full closure around the bent portion of the second light radiation element 113 (see the lower sub-figure in Figure 5b)).

A part of the second light radiation element 113 clipped into the central portion 331 of the second coupling unit 130 is exposed for an illumination onto the decorative plate 140.

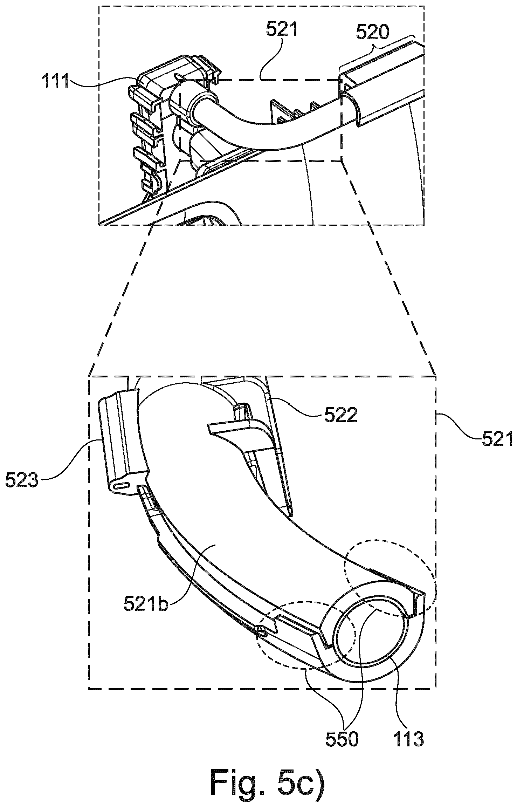

Figure 5c) illustrates an interface of the bent portion of the second coupling unit 130.

The assembled bent portion of the second coupling unit 130 interfaces the second opening 212 of the light source housing 210 of the light source unit 111.

The encapsulation surrounding such interface may be prone to light leakage.

Such leakage is prevented by light traps 550 extending from the upper body 521a and surrounding a part of the outer surface of the lower body 521b therewith.

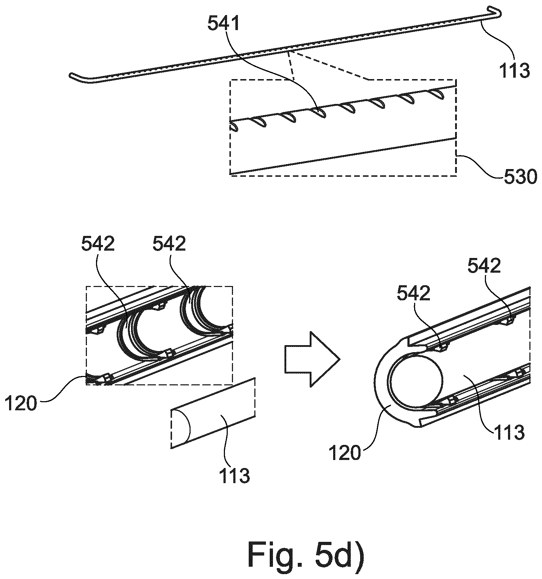

The fastening of the central portion 331 of the second radiation element to the central portion 331 of the second coupling unit 130 is further elaborated in reference to Figure 5d).

The central portion 331 of the second light radiation element 113 comprises a plurality of equidistant recesses 541 on its outer surface along the axial axis.

The central portion 331 of the second coupling unit 130 is C-shaped and comprises an inner surface which interfaces the outer surface of the second light radiation element 113, once assembled.

The central portion 331 of the second coupling unit 130 comprises a plurality of equidistance protrusions 542 on the inner surface, for fitting into the recesses 541 on the second light radiation element 113.

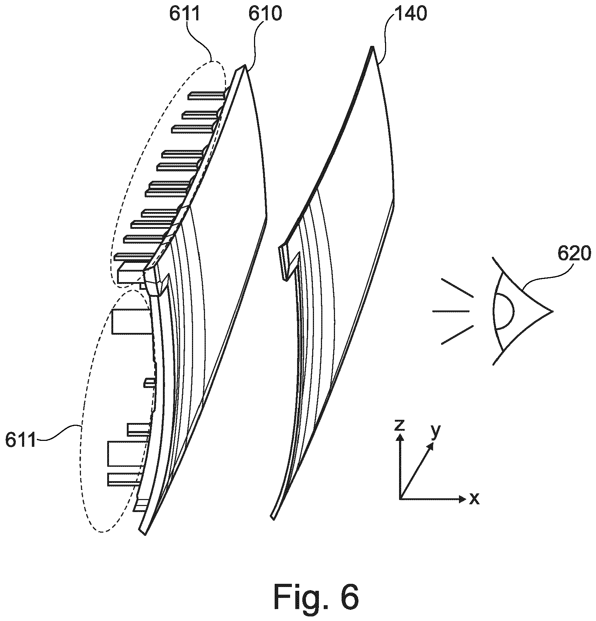

Figure 6 illustrates a diffusive plate 610, the decorative plate 140, and a passenger.

The diffusive plate 610 comprises ribs 611 along the edges of a rear surface (i.e., the surface facing the negative direction in the x-axis in Figure 6).

The ribs 611 pass through the interlocking slits of the first coupling unit 120 and fix the diffusive plate 610 onto the first coupling unit 120.

The diffusive plate 610 passively diffuses the light radiating from the first, plate-shaped light radiation element.

The decorative plate 140 is fixed to a front surface (i.e., the surface facing the positive direction in the x-axis in Figure 6) of the diffusive plate 610.

The decorative plate 140 comprises holes through the front and rear surface of the decorative plate 140.

Through these holes, light radiating through the diffusive plate 610 passes through and illuminates the interior of the passenger cabin.

The exited light is directed towards the interior of the passenger cabin, as indicated by the passenger viewpoint 620.

The illumination assemblies and their operating modes are further elaborated in reference to the following figures.

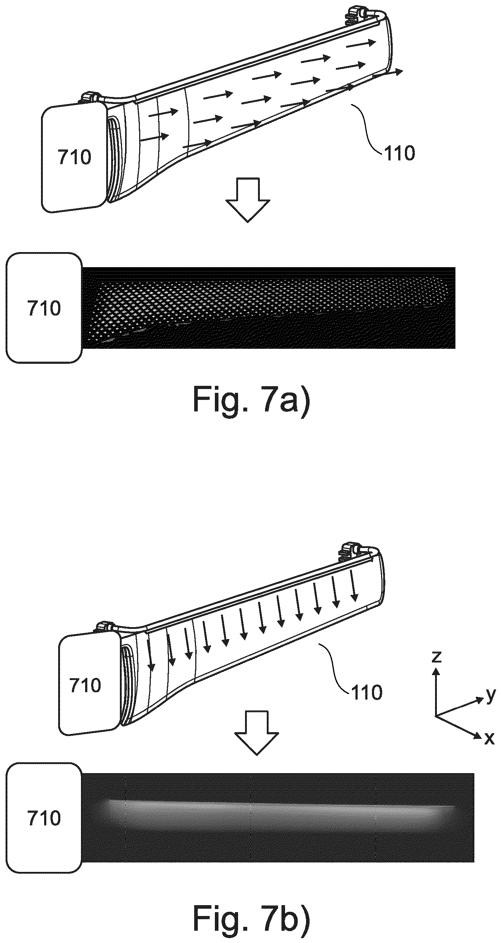

The illumination assemblies in Figure 7a) and 7b) are front dashboards on the passenger side of a motor vehicle, and are positioned next to an infotainment screen 710.

The dashboards are arranged such that the front surface of the decorative plate 140 is oriented towards the interior of the passenger cabin.

The upper sub-figure in Figure 7a) illustrates the illumination assembly in the first arrangement operating in the first operating mode.

In the first operating mode, the first group of light source 251 is activated, i.e., controlled to generate light, and the second group of light source 252 is deactivated, i.e., controlled to inhibit the light generation.

The generated light is guided through the first, plate-shaped radiation element, diffused through the diffusive plate 610, and eventually radiates through the holes of the decorative plate 140, as indicated with the arrows in Figure 7a).

The lower sub-figure in Figure 7a) illustrates such illumination in the first operating mode.

In the first operating mode, the diffused light passing through the holes of the decorative plate 140 illuminates the interior of the passenger cabin.

In other words, in the first operating mode, the interior of the passenger cabin is illuminated by direct lighting facing towards the interior of the passenger cabin.

Upper sub-figure of Figure 7b) illustrates the illumination assembly in a first arrangement operating in a second operating mode.

The illumination assembly comprises a diffusive plate 610 between the first, plate-shaped light radiation element 112 and the decorative plate 140.

In the first arrangement, the second coupling unit 130 comprising the second light radiation element 113 is arranged adjacent to a longer edge of the first, plate-shaped light radiation element.

For illustrative purposes, the reference of the edges will be made to the decorative plate 140.

Specifically, the second coupling unit 130 is arranged above (i.e., in the positive direction of the z-axis in Figure 7b)) the decorative plate 140 along an upper long edge (i.e., along y-axis in Figure 7b)) of the decorative plate 140, while protruding towards the direction the front surface of the decorative plate 140 is facing (i.e., the positive direction of the x-axis in Figure 7b)), with respect to the decorative plate 140.

The second coupling unit 130 stretches over at least 80% of the upper long edge of the decorative plate 140.

The central portion 331 of the second coupling is arranged to radiate towards the front surface of the decorative plate 140, as indicated with the arrows in Figure 7b), once the second light radiation element 113 is radiating.

In the second operating mode, the first group of light source 251 is deactivated, i.e., controlled to inhibit the light generation, and the second group of light source 252 is activated, i.e., controlled to generate light.

The generated light is guided through the second light radiation element 113, and eventually radiates towards the front surface of the decorative plate 140.

The lower sub-figure in Figure 7b) illustrates such illumination in the first operating mode.

In the second operating mode, the light radiated onto the front surface of the decorative plate 140 reflects off the front surface, which in turn illuminates the interior of the passenger cabin.

In other words, in the second operating mode, the interior of the passenger cabin is illuminated by indirect lighting.

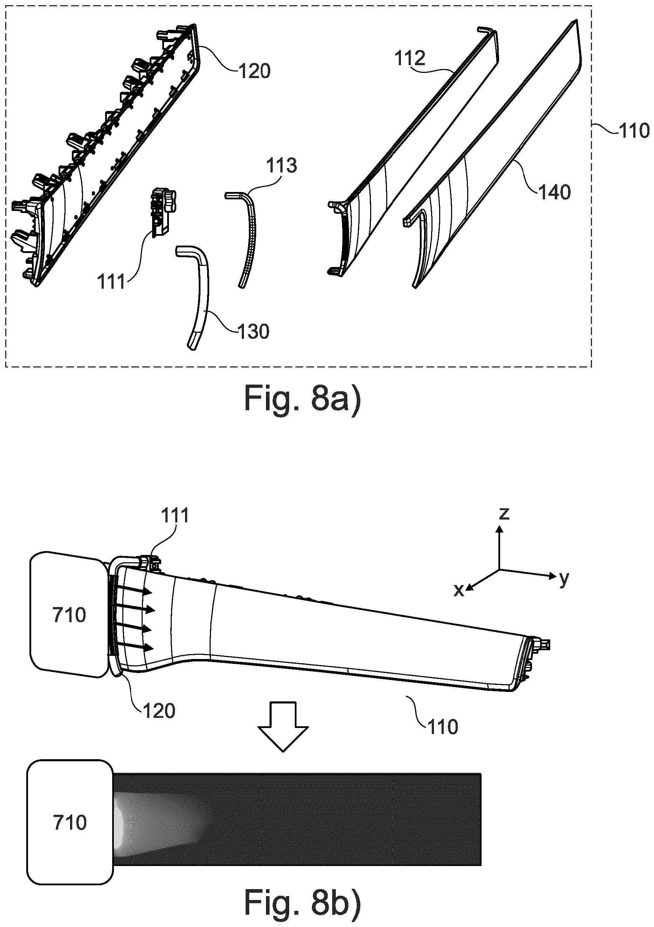

Figure 8a) illustrates the illumination assembly for a second arrangement.

The illumination assembly comprises one light source unit 111, the first, plate-shaped light radiation element, and the second light radiation element 113.

The illumination assembly further comprises the first coupling unit 120, the second coupling unit 130, and the decorative plate 140.

The illumination assembly further comprises the diffusive plate 610 between the first, plate-shaped light radiation element 112 and the decorative plate 140.

The diffusive plate 610 is omitted in Figure 8a) for simplicity.

For the second arrangement, the second coupling unit 130 and the respective second light radiation element 113 are dimensioned with respect to a shorter edge of the first, plate-shaped light radiation element, i.e., the second coupling unit 130 is dimensioned to stretch over at least 80% of the short edge of the decorative plate 140.

The upper sub-figure in Figure 8b) illustrates the illumination assembly in the second arrangement.

The illumination assembly is a front dashboard on the passenger side of a motor vehicle, and is positioned next to the infotainment screen 710.

The dashboard is arranged such that the front surface of the decorative plate 140 is oriented towards the interior of the passenger cabin.

The second coupling unit 130 is arranged above (i.e., in the positive direction of the x-axis in Figure 8b)) the decorative plate 140 along a short edge (i.e., along z-axis in Figure 8b)) of the decorative plate 140, while protruding towards the direction the front surface of the decorative plate 140 is facing (i.e., the positive direction of the x-axis in Figure 8b)), with respect to the decorative plate 140.

The illumination is operating in the second operating mode.

The light radiation from the second light radiation element 113 towards the decorative plate 140s is indicated by the arrows in the upper sub-figure in Figure 8b).

The lower sub-figure in Figure 8b) illustrates such illumination in the first operating mode.

In the second operating mode, the light radiated onto the front surface of the decorative plate 140 reflects off the front surface, which in turn illuminates the interior of the passenger cabin.

In other words, in the second operating mode, the interior of the passenger cabin is illuminated by indirect lighting.

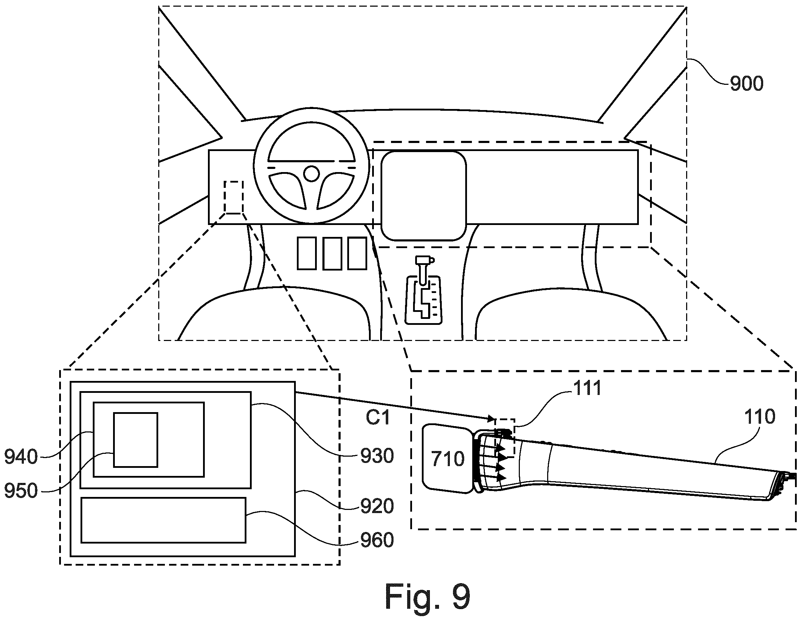

Figure 9 illustrates a frontal view from the passenger cabin of a vehicle 900.

The vehicle 900 comprises the illumination assembly 110 in the second arrangement as shown in Figure 8b) and a data processing apparatus 920.

The illumination assembly 110 extends from the central infotainment screen 710 towards the right side of the passenger cabin.

The illumination assembly 110 comprises a light source unit 111, a first, plate-shaped light radiation element 112, and a second light radiation element 113.

For illustrative purposes, the data processing apparatus 920 is shown to be arranged on the dashboard, on the left side of the steering wheel, but it is understood by the skilled person that the data processing apparatus 920 may be arranged elsewhere in or on the vehicle 900.

The data processing apparatus 920 comprises a data storage unit 930 and a data processing unit 960.

The data storage unit 930 comprises a computer-readable storage medium 940.

On the computer-readable storage medium 940, there is provided a computer program 950.

The computer program 950 and, thus, also the computer-readable storage medium 940, comprise instructions which, when executed by the data processing unit 960, or, more generally speaking, a computer, cause the computer or the data processing unit 960 to carry out a method for operating the illumination assembly 110.

The data processing apparatus 920 is communicatively coupled with the light source unit 111.

The data processing apparatus 920 transmits a control signal C1 to the light source unit 111 for activating or deactivating the light sources comprised in the light source unit 111.

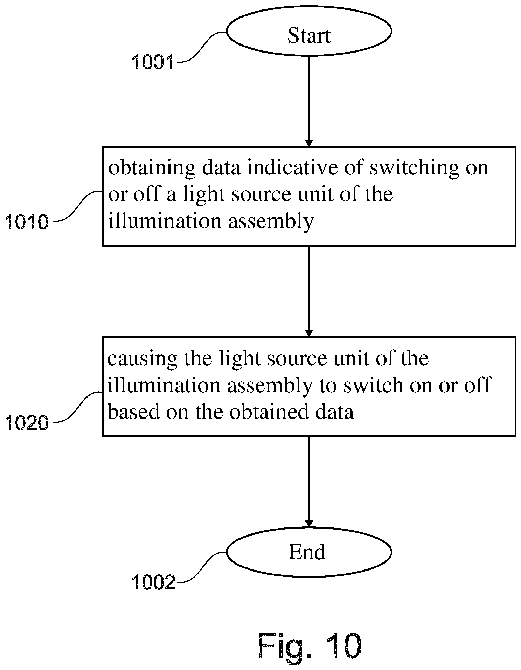

Figure 10 illustrates an example of a method for operating an illumination assembly for an interior of a passenger cabin of a vehicle 900.

The method starts at 1001.

At 1010, data indicative of switching on or off a light source unit 111 of the illumination assembly is obtained.

For passenger cabin lighting, the passenger is prompted to provide input data through an interactive medium such as GUI on the infotainment screen 710, a physical button, or a tactile rotary infotainment controller.

The input data is received and processed by the data processing apparatus 920.

The data processing apparatus 920 determines which of the groups of light source should be activated and deactivated based on the input data.

The data processing apparatus 920 generate a control signal, which is fed to the PCB 240 comprising the light sources.

At 1020, the light source unit 111 of the illumination assembly to switch on or off is caused based on the obtained data.

Accordingly, either the first or second group of light source 252 is turned on.

The method ends at 1002.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 110: Illumination assembly
- 111: Light source unit
- 111a: First light source unit
- 111b: Second light source unit
- 112: First, plate-shaped light radiation element
- 113: Second light radiation element
- 120: First coupling unit
- 130: Second coupling unit
- 140: Decorative plate
- 210: Light source housing
- 211: First opening
- 212: Second opening
- 221: First interlocking clasps
- 222: Second interlocking clasps
- 231: Pin opening
- 240: Printed circuit board
- 251: First group of light source
- 252: Second group of light source
- 261: Pins
- 311: First optical coupling portion
- 312: Second optical coupling portion
- 321: First coupling protrusion
- 322: Second coupling protrusion
- 331: Central portion
- 332: First bent portion
- 333: Second bent portion
- 411: First optical coupling portion
- 412: Second optical coupling portion
- 421: First coupling protrusion
- 422: Second coupling protrusion
- 431: First coupling recess
- 432: Second coupling recess
- 441: First interface portion
- 442: Second interface portion
- 451: Interlocking slits
- 520: Central portion
- 521: Bent portion
- 521a: Upper body
- 521b: Lower body
- 522: Clips
- 523: Hinge
- 524: Clipping pair
- 530: Zoomed in view of the second light radiation element
- 541: Recess
- 542: Protrusion
- 550: Light traps
- 610: Diffusive plate
- 611: Ribs 611
- 620: Passenger viewpoint
- 710: Infotainment screen
- 900: Motor vehicle
- 920: Data processing apparatus
- 930: Data storage unit
- 940: Computer-readable storage medium
- 950: Computer program
- 960: Data processing unit
- 1001: Start
- 1010: First step
- 1020: Second step
- 1002: End

## Claims

1. An illumination assembly (110) for an interior of a passenger cabin of a vehicle (900), the illumination assembly comprising:
• a light source unit (111);
• a first, plate-shaped light radiation element (112) having a front surface orientable towards the interior of the passenger cabin of the vehicle (900); and
• a second light radiation element (113) arranged adjacent to an edge of the first, plate-shaped radiation element (112) such that the second light radiation element (113) may radiate towards the front surface of the first, plate-shaped light radiation element (112),
wherein the first, plate-shaped light radiation element (112) is optically coupled to the light source unit (111), and
wherein the second light radiation element (113) is optically coupled to the light source unit (111).

2. The illumination assembly (110) of claim 1, wherein the light source unit (111) comprises at least one first light source being optically couplable to the first, plate-shaped light radiation element, and wherein the light source unit (111) comprises at least one second light source being optically couplable to the second light radiation element (113).

3. The illumination assembly of claim 2, wherein the at least one first light source and the at least one second light source share a substrate or are electrically connected to a common board sharing a substrate.

4. The illumination assembly of claim 2 or 3, wherein the at least one first light source and the at least one second light source are individually controllable.

5. The illumination assembly of any one of claims 2 to 4, wherein the light source unit (111) comprises a light source housing (210) having an inner cavity for arranging the at least one first light source and the at least one second light source inside the inner cavity.

6. The illumination assembly of claim 5, wherein the light source housing (210) comprises an optical separator inside the inner cavity.

7. The illumination assembly of claim 5 or 6, further comprising:
• a first coupling element (120) being mechanically supportive of the first, plate-shaped light radiation element; and
• a second coupling element (130) being mechanically supportive of the second light radiation element (113),
wherein the first coupling element (120) is rigidly fixable to the light source housing, and
wherein the second coupling element (130) is rigidly fixable to the light source housing.

8. The illumination assembly of any one of the preceding claims, further comprising a decorative plate (140) having a rear surface illuminable by the first, plate-shaped light radiation element (112) and having a front surface orientable towards the interior of the passenger cabin of the vehicle (900) and illuminable by the second light radiation element (113).

9. The illumination assembly of 8, wherein the decorative plate (140) comprises at least one translucent portion and/or at least one transparent portion.

10. The illumination assembly of claim 8 or 9, further comprising a light diffusible plate (610) being arrangeable between the first, plate-shaped light radiation element (112) and the decorative plate (140).

11. The illumination assembly of any one of the preceding claims, wherein the second light radiation element (113) extends over at least 80% of a length of the edge of the first, plate-shaped radiation element.

12. A vehicle (900) comprising the illumination assembly of any one of the preceding claims.

13. The vehicle (900) of claim 12, wherein the illumination assembly is mounted on at least one of a dashboard of the vehicle (900), an interior sidewall of at least one door, a glovebox, a rear side of at least one seat, a ceiling, at least one of the front doors, and at least one of the rear doors.

14. A method for operating an illumination assembly for an interior of a passenger cabin of a vehicle (900), the method comprising:
obtaining data indicative of switching on or off a light source unit (111) of the illumination assembly; and
causing the light source unit (111) of the illumination assembly to switch on or off based on the obtained data.
